# EUROPEAN PATENT APPLICATION

(11) **EP 2 857 725 A1**
(43) Date of publication of application: **08.04.2015**
(21) Application number: 13797691.6
(22) Date of filing: 21.05.2013
(51) Int. Cl.: F16K 7/10, F16K 15/20, F16L 55/134

(54) **DEVICE FOR SEALING DUCTS**

(30) Priority: 31.05.2012 ES 201230830; 11.09.2012 ES 201230942
(71) Applicant: Matrival, S.L., E-46469 Beniparrel (Valencia) (ES)
(72) Inventor: PEÑA VALCARCEL, Felipe, E-46469 Beniparrell (Valencia) (ES)
(74) Representative: Ungria López, Javier
(86) International application number: PCT/ES2013/070320
(87) International publication number: WO 2013/178848

(57) **Abstract**

The invention relates to a device (1) for sealing ducts, comprising a store (3) containing pressurized air, a button (2) attached to the store (3), and a bag (4). The button (2) is used to release the pressurized air of the store (3), said button (2) comprising two horizontal parallel walls, each one of the parallel walls having a perforation at one end and an appendage (11) at the other end, that joins the parallel walls to each other and extends perpendicularly to the walls, and an L-shaped trigger (12) with one limb of the "L" located between the parallel walls and the other limb located parallel to the appendage (11). The limb of the trigger (12) parallel to the appendage is pressed by rotating the trigger (12) around the perforation and pressing a valve (19) contained in the store (3), releasing the pressurized air from inside the store (3) by means of said rotation.

## Description

### OBJECT OF THE INVENTION

The present invention relates to a device used for sealing ducts which is arranged at the ends of said ducts.

It is used in duct installations which are not going to be immediately used or in installations which are exposed to the actions of animals.

### TECHNICAL PROBLEM TO BE SOLVED AND BACKGROUND OF THE INVENTION

In any installation that has ducts it is a priority to avoid animals and/or dirt being introduced into these ducts which may cause the use of the duct to become limited or even cause the duct to become obstructed and as a result useless or cause its repair to be very costly.

Ducts in installations which are not going to have a cable introduced into them for a time, or in those which already have a cable in their interior and the access to them is complicated, it is essential that the ducts are sealed and that the entry of any element which may damage the duct or break the cables running through the interior of the duct is avoided.

To this end, devices which are arranged at the ends of the ducts and which are adapted to the geometry of the ducts, expanding until sealing the entry to the duct by pressure are used.

The devices used have a bag which expands thanks to the introduction of a gas into its interior in such a way that with its expansion a pressure is exerted against the duct achieving the sealing of the same.

In the prior art, document EP 1614953 A1 can be found, which shows a device for sealing ducts used in electrical, telephone and similar lines by means of inflating an element. Document US 5 901 962 A discloses a device for sealing the hole existing between a cable and the duct through which the cable runs by means of inflating an element, however, inflating this element takes place by manual means.

The device which is the object of the invention is used for sealing ducts through which a cable circulates or ducts which are empty and it is desired to avoid dirt entering them.

### DESCRIPTION OF THE INVENTION

The invention discloses a device by means of which the sealing of ducts is carried out through the end of the same.

In the device the object of the invention the button is used to release the pressurized air of the store, said button comprising two horizontal parallel walls, each one of the parallel walls having a perforation at one end and an appendage at the other end, that joins the parallel walls to each other and extends perpendicularly to the parallel walls; and an L-shaped trigger with one limb of the "L" located between the parallel walls and the other limb located parallel to the appendage.

In the device object of the invention pressing the limb parallel to the appendage of the trigger causes the trigger to rotate about the perforation and by means of said rotation said trigger presses a valve contained in the store, releasing the pressurized air from inside the store.

The button of the device object of the invention comprises, in addition to the horizontal parallel walls, the appendage and the trigger:
- in its lower part, a circular flap;
- following the flap, a circular flat surface perpendicular to the flap which extends through the interior of the button; the circular flat surface comprising a through hole;

In the device for sealing ducts, the circular flap has at least two diametrically opposed grooves which facilitate the clip-on assembly on the upper part of the store by means of snap-fit.

In the device for sealing ducts, the through hole comprises a circular form with a rectangle tangential to the circular form through one of its larger sides.

In the device for sealing ducts, in the joining of the two limbs of the "L", the trigger comprises an orifice which is arranged corresponding to the perforations of the parallel walls and by means of a pin introduced through the perforations and the orifice, the trigger and the parallel walls are joined.

In the device for sealing ducts, the release of the pressurized air from the store expands the bag which effects pressure against the duct, sealing the mentioned duct, where the bag has a laminate structure which comprises a central aluminum sheet surrounded by two polyamide sheets which are fixed to the aluminum by means of a chemical adhesive and joined to the polyamide covers are polyethylene sheets configuring the exterior of the bag.

In the device for sealing ducts, the central aluminum sheet of the bag has a thickness of between 15 and 30 µm.

In the device for sealing ducts, the polyamide sheets located at the two sides of the central aluminum sheet of the bag have a thickness of between 8 and 15 µm.

In the device for sealing ducts, the polyethylene sheets which constitute the exterior cover of the bag have a thickness of between 50 and 100 µm.

In the device for sealing ducts, the store comprises a cylindrical body with one end of said body in the form of a truncated cone and the other end comprises a connecting head for the button.

In the device for sealing ducts, the pressurized air contained in the store of the device is compressed to a pressure in a range which goes from 100 to 200 atmospheres of pressure.

In the device for sealing ducts, the head of the store is connected to the body of the store by way of a threaded area located at one end of the head and at the other end the head comprises a perimetral flange connecting the store to the button.

In the device for sealing ducts, the valve is actuated by means of an activator which passes through the through hole of the button.

### DESCRIPTION OF THE FIGURES

To complement the description and with the aim of aiding a better understanding of the characteristics of the invention, a set of drawings accompanies the specification, as an integral part thereof, wherein the following is represented in an illustrative and non-limiting manner:
Figure 1 shows a perspective view of the device which is the object of the invention with the bag undivided.
Figure 2 shows a perspective view of the device which is the object of the invention with the bag divided into different parts.
Figure 3 shows a perspective view of the device which is the object of the invention arranged in the duct.
Figure 4 shows a perspective view of the store containing pressurized air with the button installed which forms part of the device which is the object of the invention.
Figure 5 shows a view of a section of the store containing air with two details of said section.
Figure 6 shows a perspective view of the button which forms part of the device which is the object of the invention.
Figure 7 shows another perspective view of the button which forms part of the device which is the object of the invention.
Figure 8 shows a view of a section of the button which forms part of the device which is the object of the invention.
Figure 9 shows a perspective view of the trigger which forms part of the button of the device.
Figure 10 shows a section of a wall of the bag which forms part of the device which is the object of the invention.

The reference numerals which are reflected in the figures correspond to the following elements:
1.- device, 2.- button, 3.- store, 4.- bag, 5.- flap, 6.- groove, 7.- flat surface, 8.- through hole, 9.- parallel wall, 10.- perforation, 11.- appendage, 12.-trigger, 13.- orifice, 14.- pin, 15.- body, 16.- head, 17.- threaded area, 18.-perimetral flange, 19.- valve, 20.- activator, 21.- aluminum sheet, 22.-polyamide sheet, 23.- polyethylene sheet, 24.- area interior to the duct, 25.-connecting area of the store, 26.- communicating area, 27.- sealing filler, 28.-duct, 29.- reinforcement.

### PREFERRED EMBODIMENT OF THE INVENTION

The object of the invention is a easily operated device (1) which seals ducts, as indicated and as can be observed in the outlined figures.

The device (1) object of the invention comprises a store (3) with a button (2) at one end of said store (3), the store (3) containing pressurized air which is released by the button (2) to expand a bag (4) which by exerting pressure against the duct desired to be sealed, seals said duct.

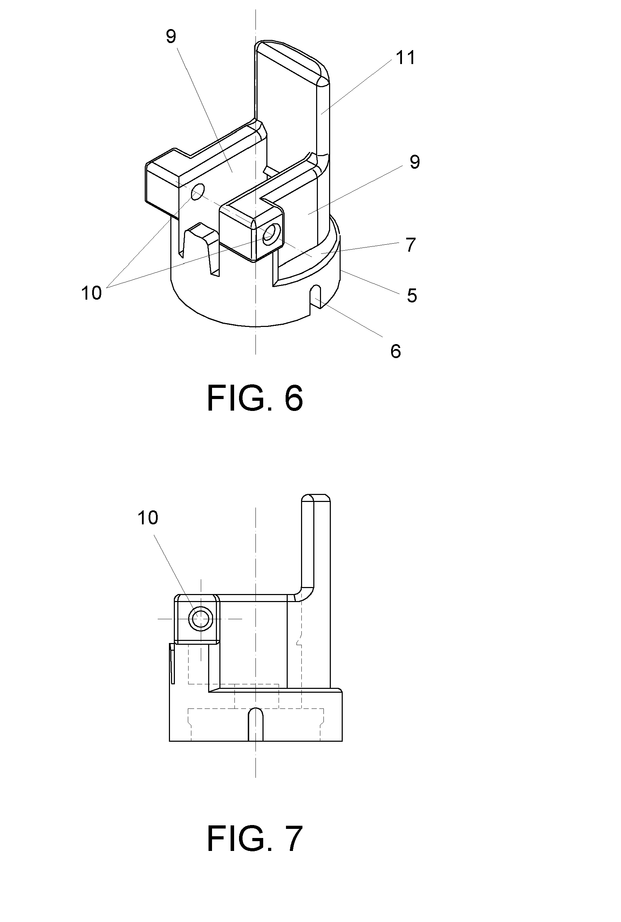

Hereinafter and with reference to the figures 6, 7 and 8, the button (2) of the device (1) which is the object of the invention is described.

The button (2) comprises, in its lower part, a circular flap (5) which enables the assembly thereof on the pressurized air store (3), by means of arranging the flap (5) on the upper part of the store (3). The circular flap (5) has at least two diametrically opposed grooves (6) which facilitate the clip-on assembly on the upper part of the store (3) by snap-fit.

The button (2) comprises, following to the flap (5), a circular flat surface (7) which is perpendicular to the flap (5) and which extends through the interior of the button (2); the circular flat surface (7) comprises a through hole (8) in its central area, the form of the through hole (8) being circular with a rectangle tangential to the circular form though one of its larger sides.

In the button (2) perpendicular to the flat surface (7) and in a direction opposed to the connection with the store (3), two walls (9) are erected parallel to each other, each one of the parallel walls (9) comprises a perforation (10) at one end and at the other end comprises an appendage (11) which joins the parallel walls (9) to each other and extends perpendicular to the flat surface (7).

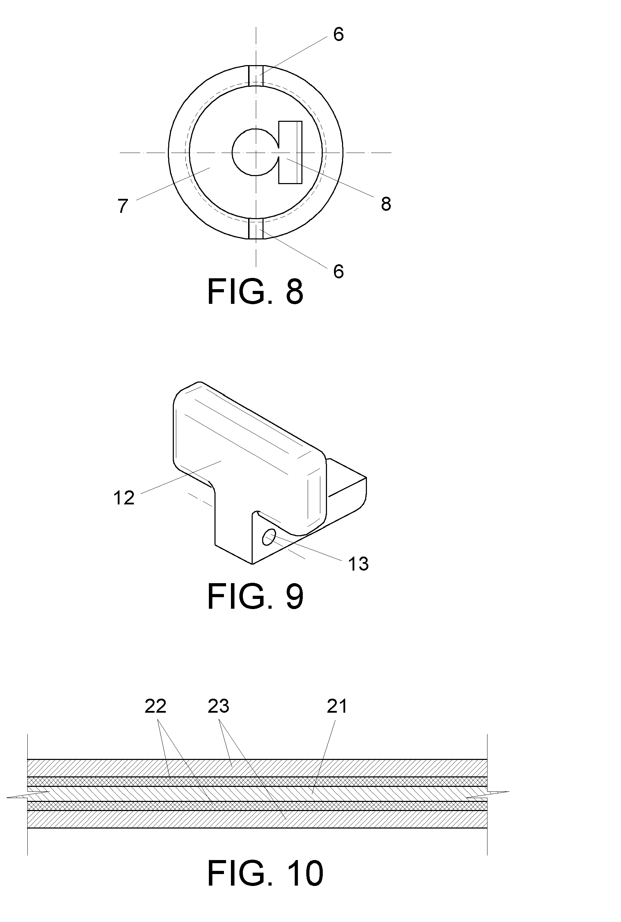

The button (2) comprises a trigger (12), with an "L" shape (observed in figure 9), with one limb of the "L" located between the parallel walls (9) and the other limb located parallel to the appendage (11); in the joining of the two limbs of the "L", the trigger (12) comprises an orifice (13) which is arranged corresponding to the perforations (10) of the parallel walls (9) and introducing a pin (14) the trigger (12) is joined to the parallel walls (9).

The store (3) incorporates air compressed at high pressure in its interior, the pressurized air having been selected and not other gases due to the stability of the air before the variations of temperature.

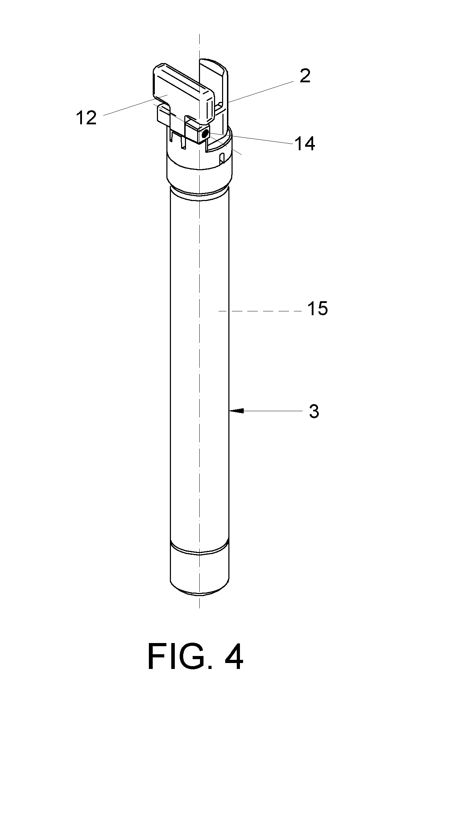

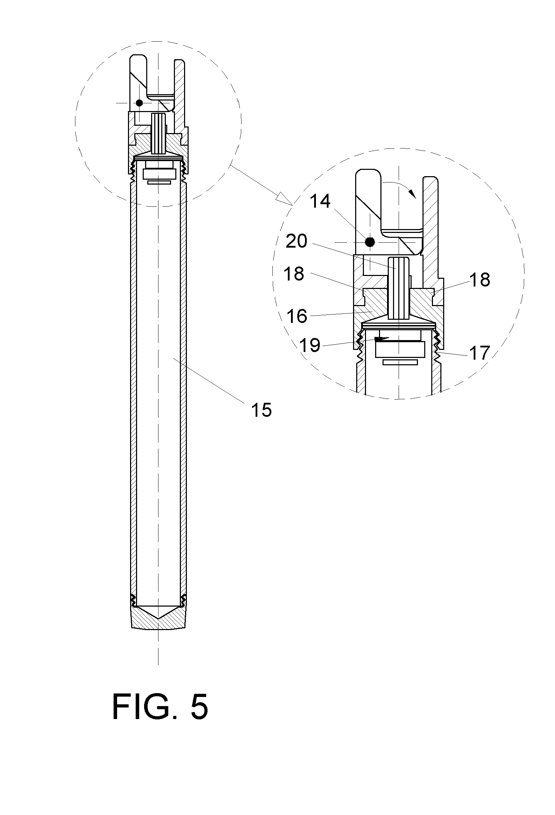

The store (3), as may be observed in figures 4 and 5, comprises a body (15) of a cylindrical shape, one end has a shape of a truncated cone trunk and the other end has a head (16) by way of which the connection to the button (2) takes place.

The head (16) of the store (3) is connected to the body (15) of the store (3) by way of a threaded area (17). At the end of the head (16) of the store (3), there is a perimetral flange (18) for connecting the store (3) to the button (2) by way of the flap (5) of said button (2).

The head (16) of the store (3) incorporates, at its end, a valve (19) which comprises an activator (20) which passes through the through hole (8) of the button (2).

The valve is actuated by pressing the trigger (12) of the button (2), specifically, pressing the limb parallel to the appendage (11), a rotation of the trigger (12) about the pin (14) of the button (2) takes place, in which the limb of the trigger (12) located between the parallel walls (9) is displaced and presses the activator (20) of the valve (19) releasing the compressed air which is in the store (3).

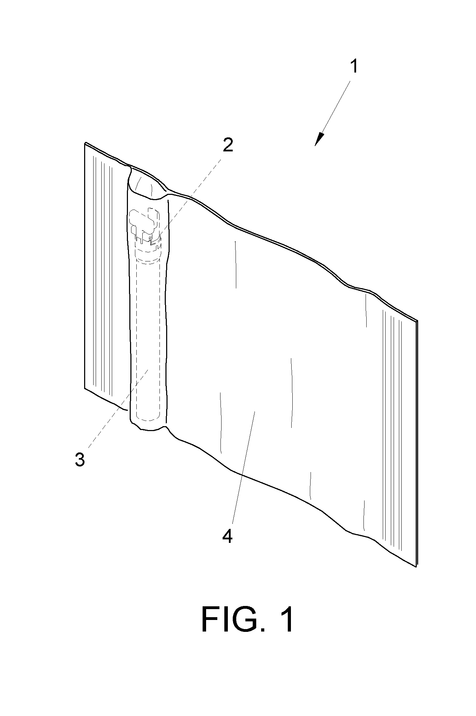

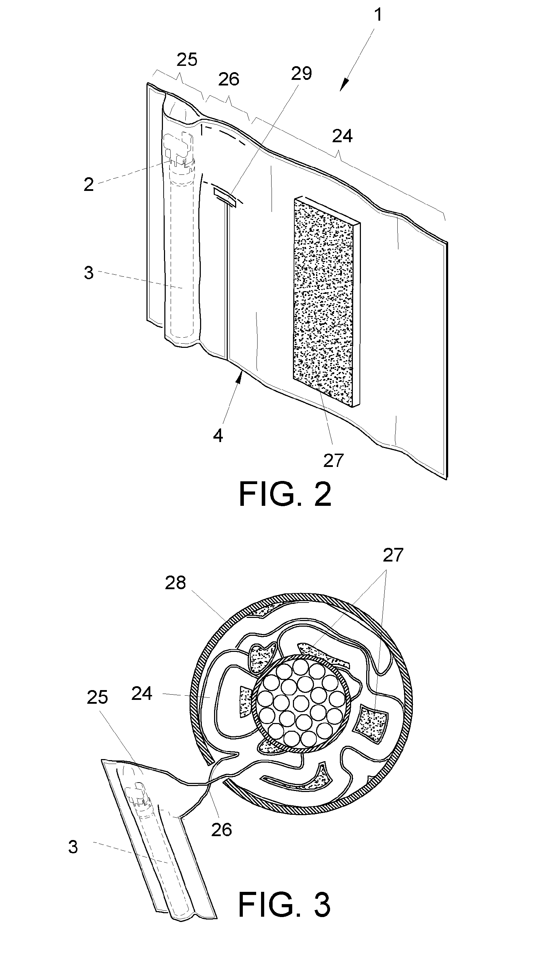

In the device object of the invention, there exist two embodiments of the bag (4). In the first embodiment (observed in figure 1), the bag (4) is a single integral body. In the second embodiment (observed in figure 2), the bag (4) comprises three different parts all of them joined and connected to each other:
- area interior to the duct (24),
- connecting area of the store (25),
- communicating area (26).

The area interior to the duct (24) is the part of the bag (4) which is arranged, if a cable exists, around the cable and in the interior of the duct (28) to be sealed, the connecting area of the store (25) is the part of the bag (4) which is on the exterior of the duct (28) and where the store (3) containing the pressurized air is found, and the communicating area (26) is the part of the bag (4) through which the air passes when it is released from the store (3) until the area interior to the duct (24) is inflated and said duct (28) sealed.

In the communicating area (26) of the bag, a reinforcement (29) to avoid the separation of the connecting area of the store (25) from the area interior to the duct (24) during use of the device (1) object of the invention is found.

Likewise, in order to fill the free spaces which may be left when expanding the bag (4) sealing the duct (28), the bag (4) comprises a sealing filler (27) which is found on the exterior of the area interior to the duct (24) which, when the bag (4) is expanded in the interior of the duct (28), helps to obtain a complete sealing of the duct (28).

The walls of the bag (4) of the device (1) which is the object of the invention, have a laminate structure (observed in figure 10) composed of a central aluminum sheet (21), surrounded by two polyamide sheets (22) which are fixed to the central aluminum sheet (21) by means of a chemical adhesive and a final polyethylene sheet (23) which configures the external cover of the bag, said polyethylene sheet (23) is fixed to the polyamide sheets (22) by the heat of the laminating process of the bag, without the need of any type of adhesive.

The aluminum sheet (21) of the walls of the bag (4) has a thickness of between 15 and 30 µm, the thickness used in the preferred embodiment of the invention being 20 µm.

Each polyamide sheet (22) of the structure of the bag (4) has a thickness of between 8 and 15 µm, the thickness used in the preferred embodiment of the invention being 12 µm.

Each polyethylene sheet (23) of the walls of the bag (4) has a thickness of between 50 and 100 µm, the thickness used in the preferred embodiment of the invention being 80 µm.

This laminate structure is a structure which has a mechanical resistance capable of supporting the forces generated in the sealing of the duct, and in turn it is a flexible and deformable structure allowing it to adapt to the duct to be sealed.

The functioning of the embodiment of the device (1) object of the invention is as follows:
- arranging the area interior to the duct (24) of the bag (4) of the device (1) around a cable which runs through the interior of a duct (28) when this cable exists, at one end of the duct (28) to be sealed, leaving the connecting area of the store (25) outside said duct (28),
- pressing the button (2) such that it enables the exit of the compressed air from the store (3).
- the air passes through the communicating area (26) of the connecting area of the store (25) to the area interior to the duct (24),
- the duct (28) becomes sealed by pressure in the area interior to the duct (24) of the bag (4) against the interior of said duct (28), the cable becoming embedded in the area interior to the duct (24) of the bag (4), in the case that the cable exists.

The invention must not be seen to be limited to the particular embodiment described in this document. A person skilled in the art may develop other embodiments upon sight of the description given here. Consequently, the scope of the invention is defined by the following claims.

## Claims

1. Device (1) for sealing ducts comprising:
- a store (3) inside of which pressurized air is found, and
- a button (2) attached to the store (3),
- a bag (4),
**characterized in that** the pressurized air of the store (3) is release by the button (2), said button (2) comprising
- two horizontal parallel walls (9), each one of the parallel walls (9) having a perforation (10) at one end and an appendage (11) at the other end, that joins the parallel walls (9) to each other and extends perpendicularly to the walls (9),
- an L-shaped trigger (12) with one limb of the "L" located between the parallel walls (9) and the other limb located parallel to the appendage (11).
such that pressing the limb of the trigger (12) parallel to the appendage the trigger (12) rotates about the perforations (10) and said trigger (12) actuates a valve (19) contained in the store (3), releasing the pressurized air from inside the store (3) by means of said rotation.

2. Device (1) for sealing ducts according to claim 1, **characterized in that** the button (2) of the device (1) comprises, in addition to the two parallel walls (9), the appendage (11) and the trigger (12):
- in its lower part, a circular flap (5);
- above the flap (5), a circular flat surface (7) perpendicular to the flap (5) which extends through the interior of the button (2); the circular flat surface (7) comprising a through hole (8).

3. Device (1) for sealing ducts according to claim 2, **characterized in that** the circular flap (5) comprises at least two diametrically opposed grooves (6) which facilitate the slip-on assembly on the upper part of the store (3) by means of snap-fit.

4. Device (1) for sealing ducts according to claim 1, **characterized in that** the trigger (12), in the joining of the two limbs of the "L", comprises an orifice (13) which is arranged corresponding to the perforations (10) of the parallel walls (9) and by means of a pin (14) introduced through the perforations (10) and the orifice (13), the trigger (12) and the parallel walls (9) are joined.

5. Device (1) for sealing ducts according to claim 2, **characterized in that** the through hole (8) comprises a circular form with a rectangle tangential to the circular form through one of the larger sides of the rectangle.

6. Device (1) for sealing ducts according to any one of the preceding claims, **characterized in that** the release of the pressurized air from the store (3) expands the bag (4) which exerts pressure against the duct, sealing the mentioned duct, where the bag (4) has a laminate structure which comprises a central aluminum sheet (21) surrounded by two polyamide sheets (22) which are fixed to the aluminum sheet (21) by means of a chemical adhesive and joined to the polyamide sheets (22) are polyethylene sheets (23) configuring the exterior of the bag (4).

7. Device (1) for sealing ducts according to Claim 6, **characterized in that** the bag (4) is divided into:
- an area interior to the duct (24),
- a connecting area of the store (25), and
- a communicating area (26) of the area interior to the duct (24) and the connecting area of the store (25).

8. Device (1) for sealing ducts according to Claims 6 to 7, **characterized in that** the central aluminum sheet (21) of the bag (4) has a thickness of between 15 and 30 µm.

9. Device (1) for sealing ducts according to any one of Claims 6 to 8, **characterized in that** the polyamide sheets (22) located at the two sides of the central aluminum sheet (21) of the bag (4) have a thickness of between 8 and 15 µm.

10. Device (1) for sealing ducts according to any one of Claims 6 to 9, **characterized in that** the polyethylene sheets (23), which constitute the exterior cover of the bag (4), have a thickness of between 50 and 100 µm.

11. Device (1) for sealing ducts according to any one of the preceding claims, **characterized in that** the store (3) of the device (1) comprises a cylindrical body (15) with one end of said body (15) in the shape of a truncated cone and the other end comprises a head (16) connecting to the button (2).

12. Device (1) for sealing ducts according to any one of the preceding claims, **characterized in that** the pressurized air contained in the store (3) of the device (1) is compressed at a pressure in a range which goes from 100 to 200 atmospheres of pressure.

13. Device (1) for sealing ducts according to Claim 11, **characterized in that** the head (16) of the store (3) is connected to the body of the store (3) by way of a threaded area (17) located at one end of the head (16) and at the other end the head (16) comprises a perimetral flange (18) for connecting the store (3) to the button (2).

14. Device (1) for sealing ducts according to any one of the preceding claims, **characterized in that** the valve (19) is actuated by means of an activator (20) which passes through the through hole (8) of the button (2).
